# EUROPEAN PATENT APPLICATION

(11) **EP 4 691 235 A1**
(43) Date of publication of application: **11.02.2026**
(21) Application number: 25194447.6
(22) Date of filing: 06.08.2025
(51) Int. Cl.: A01K 89/017, F16D 41/18, A01K 89/015

(54) **DISENGAGING MECHANISM FOR FISHING REEL**

(30) Priority: 06.08.2024 US 202418795328
(71) Applicant: Pure Fishing, Inc., Spirit Lake, IA 51360 (US)
(72) Inventor: WEI, Jiamai, GUANGZHOU, 510620 (CN); GU, Jianjun, NINGBO, 315899 (CN)
(74) Representative: Cabinet Beau de Loménie

(57) **Abstract**

A fishing reel (10) including a gear train (100) and a spool (20) is provided. The gear train (100) is operably coupled with the spool (20) such that the gear train (100) is configured to transmit rotational power to the spool (20). When the fishing reel is in a first configuration, a crank (30) is disengaged from the gear train (100) to allow the gear train (100) to receive rotational power from a motor (60). As a result, the motor (60) rotates the spool (20) without causing the crank (30) to rotate. In contrast, when the fishing reel is in the second configuration, the crank (30) is operably coupled with the gear train (100). As a result, the crank (30) may provide rotational power to the gear train (100) to rotate the spool (20). However, if the gear train (100) begins to rotate relative to the crank (30), a key may move outwardly from a crank gear (135) to cause the fishing reel to transition to the first configuration.

## Description

### Cross-Reference to Related Applications

### Field of the Invention

The present invention relates generally to a disengaging mechanism. More particularly, the present invention relates to a disengaging mechanism configured to selectively disengage a crank of an electrically powered fishing reel.

### Background of the Invention

Fishing is a popular sport, hobby, and commercial venture. When fishing, an angler will often use a fishing reel that includes a selectively rotatable spool. When the spool rotates in a first direction, the fishing line unwinds from the spool and is released therefrom (e.g., to facilitate casting). In contrast, when the spool rotates in a second direction, the fishing line is wrapped around the spool causing the fishing line to be drawn toward the reel (e.g., to facilitate reeling in the fishing line).

In some instances, fishing involves "deep drop" techniques where the fishing line is dispensed to a relatively deep depth (e.g., depths of 1800 feet or more). In such instances, relatively long lengths of fishing line may be dispensed from the spool. However, using a handle to reel in the fishing line can be a time-consuming and laborious task.

To ease the burden associated with manual reeling, some manufacturers offer electrically powered fishing reels. Electrically powered fishing reels are configured such that spool can be selectively rotated by either a motor or a handle. For example, electrically powered fishing reels may include a gear train configured to transmit rotational power to the spool. The gear train may be selectively coupled with either the motor or the handle. Thus, an angler may selectively activate the motor to rotate the spool, or an angler may selectively engage the handle with the gear train to rotate the spool.

However, existing electrically powered fishing reels are not without deficiencies. For example, if the motor is activated while the handle is engaged with the gear train, the handle may begin to rotate as the spool is being driven by the motor. As the handle rotates, the handle has the potential to strike the angler (e.g., on the wrist) causing pain or injuries for the angler. Furthermore, the injuries caused by the handle may be especially pronounced when the motor is operating at a relatively fast speed.

### Summary of the Invention

A fishing reel including a gear train and a selectively rotatable spool is provided. The gear train is operably coupled with the spool such that the gear train is configured to transmit rotational power to the spool. In addition, the gear train is selectively couplable with each of a motor and a crank. Thus, the gear train may receive rotational power from either the motor or the crank.

More specifically, the fishing reel is selectively movable between a first configuration and a second configuration. When the fishing reel is in the first configuration, the crank is disengaged from the gear train. As a result, the crank and the gear train are independently rotatable when the fishing reel is in the first configuration. Accordingly, the spool rotates without causing the crank to rotate when the motor is activated.

In contrast, when the fishing reel is in the second configuration, the crank is configured to transmit rotational power to the gear train. More specifically, the gear train includes a crank gear with a plurality of slots positioned and located thereon. A key coupled to the crank is positioned and located in one of the slots when the fishing reel is in the second configuration. Each of the slots includes leading edges and trailing edges. When the crank is rotated, the key rotates in the first direction toward the leading edges. When the key makes contact with the leading edges, the key engages with the leading edges to cause the crank gear to rotate in the first direction. Accordingly, the spool is rotatable via the crank when the fishing reel is in the second configuration.

If the motor is activated when the fishing reel is in the second configuration, the crank gear rotates in the first direction relative to the key. However, the gear train is configured to disengage the key from the crank gear as the crank gear begins to rotate. In particular, the trailing edges are slanted toward an axial surface of the crank gear. Thus, the trailing edges preferably guide the key out from the slot when the crank gear begins to rotate in the first direction. Accordingly, the fishing reel transitions from the second configuration to the first configuration such that the crank remains stationary and preferably does not rotate when the motor is activated.

These aspects are merely illustrative of the innumerable aspects associated with the present invention and should not be deemed as limiting in any manner. These and other aspects, features, and advantages of the present invention will become apparent from the following detailed description when taken in conjunction with the referenced drawings.

### Brief Description of the Drawings

For a better understanding of the present invention, reference may be made to the following accompanying drawings.
Fig. 1 is a perspective view of a fishing reel constructed according to the teachings hereof.
Fig. 2 is a perspective view of the fishing reel of Fig. 1 in a first configuration, the fishing having a housing removed to more clearly illustrate a gear train of the fishing reel.
Fig. 3 is a perspective view of the fishing reel of Fig. 1 in a second configuration, the fishing reel having the housing removed to more clearly illustrate the gear train.
Fig. 4 is a perspective view of a crank gear of the fishing reel of Fig. 1.

### Detailed Description of the Invention

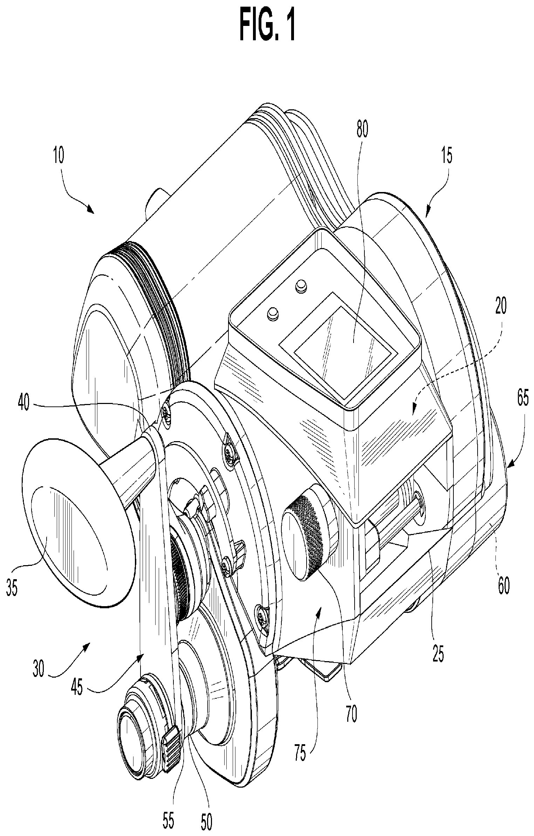

Fig. 1 illustrates an electrically powered fishing reel 10 (hereinafter referred to simply as the reel 10). The reel 10 may include a housing 15 configured to couple the reel 10 to a fishing rod (not illustrated). In addition, the reel 10 may include a spool 20 rotatably coupled to the housing 15 and configured to receive a fishing line (not illustrated). When the spool 20 receives the fishing line, the fishing line may wrap around the spool 20 and may extend outwardly from the reel 10 through an opening 25 in the housing 15.

The reel 10 may include a crank 30 that facilitates an angler rotating the spool 20 by hand. The manner of operably coupling the crank 30 with spool 20 will be described in further detail hereinafter. Once the crank 30 is operably coupled with the spool 20, the angler may grip the crank 30 via a handle 35, which is positioned and located proximate to an outer end 40 of a linkage member 45. While gripping the handle 35, the angler may apply a force to the handle 35 to rotate the linkage member 45. As a result, the linkage member 45 may rotate relative to the housing 15, and the linkage member 45 may transmit rotational power to a stem 50. The stem 50 may be positioned and located proximate to an inner end 55 of the linkage member 45 and may be operably couplable with the spool 20. Thus, an angler may use the handle 35 to rotate the spool 20.

Additionally, the reel 10 may include a motor 60 that is also configured to selectively rotate the spool 20. The motor 60 may include a brushed DC motor that is surrounded by the housing 15 such that the motor 60 is hidden in Fig. 1. For example, the motor 60 may be positioned and located in the housing 15 proximate to a distal side 65 of the housing 15. The motor 60 may receive electrical power from a rechargeable battery (not illustrated) that is removably received in the housing 15. However, in some other embodiments, the motor 60 may receive electrical power from another suitable power source (e.g., a power cord coupled to an electrical outlet). In yet other embodiments, the motor 60 may include another suitable type of electric motor (e.g., a brushless motor, a stepper motor, or a servo motor).

The motor 60 may be controlled by a knob 70 positioned and located on a proximal side 75 of the housing 15. The knob 70 may be rotatable in a clockwise direction to activate the motor 60 and in a counterclockwise direction to deactivate the motor 60. In addition, the distance that the knob 70 is rotated in the clockwise direction may control the speed at which the motor 60 rotates. However, in some alternative embodiments, the motor 60 may be controlled by a control panel 80 positioned and located on the housing 15.

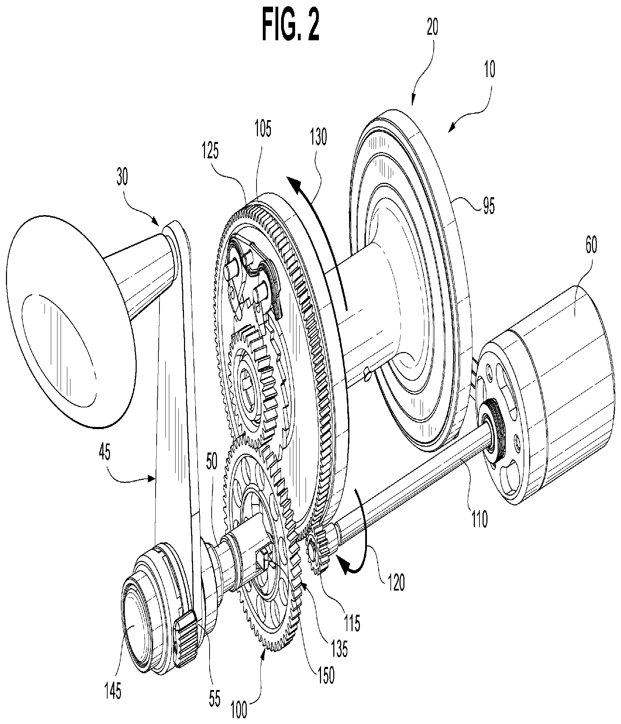

In Fig. 2, the housing 15 is hidden to more clearly illustrate the mechanism that operably couples the motor 60 to the spool 20. As illustrated, the motor 60 may be positioned and located proximate to a first end 95 of the spool 20. In addition, the motor 60 may be operably coupled to a gear train 100 configured to transfer rotational power from the motor 60 to a second end 105 the spool 20. For example, the gear train 100 may include a shaft 110 that is coupled to the motor 60. The shaft 110 may extend from the motor 60 to a motor gear 115 positioned and located proximate to the second end 105 of the spool 20. When the motor 60 is activated, the motor 60 may rotate the shaft 110 in the first direction 120, which may cause the motor gear 115 to also rotate in the first direction 120. As the motor gear 115 rotates in the first direction 120, the motor gear 115 may engage with a first spool gear 125 to cause the first spool gear 125 to rotate in a second direction 130. For example, the motor gear 115 and the first spool gear 125 may include spur gears that are sized and shaped to engage with one another, although other suitable types of gears (e.g., bevel gears, miter gears, helical gears, worm gears, or ring gears) are also foreseeable. Further, the first direction 120 and the second direction 130 may be oriented parallel and/or opposite to one another, although, other orientations for the first direction 120 and the second direction 130 are also contemplated. Accordingly, the first spool gear 125 may be configured to rotate in the second direction 130 when the motor 60 is activated.

Additionally, the first spool gear 125 may be operably coupled with the spool 20 such that the spool 20 preferably rotates in the second direction 130 when the motor 60 is activated. For example, the first spool gear 125 may be coupled to spool 20 proximate to the second end 105 of the spool 20, and the first spool gear 125 may be positioned and located concentrically with respect to the spool 20. Thus, the first spool gear 125 and the spool 20 may be configured to rotate with one another. As a result, the spool 20 may rotate in the second direction 130 when the motor 60 is activated.

In Fig. 2, the reel 10 is in a first configuration such that the crank 30 and the spool 20 are disengaged from one another. Accordingly, the crank 30 and the spool 20 may be independently rotatable. More specifically, when the reel 10 is in the first configuration, the stem 50 and a crank gear 135 may be disengaged from one another. As a result, the linkage member 45 may be rotatable without causing the spool 20 to rotate, and the spool 20 may be rotatable without causing the linkage member 45 to rotate.

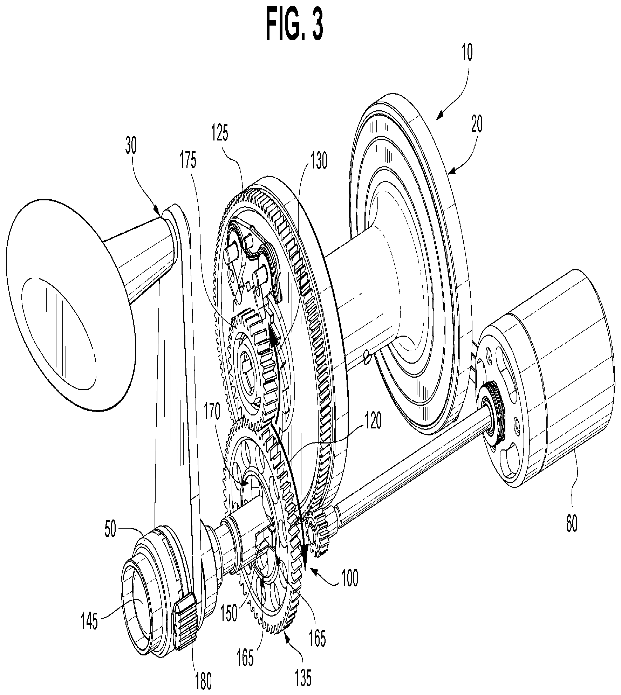

If an angler wishes to use the crank 30 to reel in the fishing line, the angler may transition the reel 10 from the first configuration (as illustrated in Fig. 2) to a second configuration (as illustrated in Fig. 3). In particular, the angler may push a button 145 inwardly (e.g., toward the spool 20) to operably couple the crank 30 with the spool 20. The button 145 may be positioned and located on the stem 50 proximate to the inner end 55 of the linkage member 45. Moreover, the button 145 may be coupled to a key 150 such that the key 150 moves toward the crank gear 135 when the button 145 is pushed inwardly.

Referring to Fig. 3, the key 150 may be received in the crank gear 135 when the reel 10 is in the second configuration. More specifically, as the key 150 is pushed inwardly toward the crank gear 135, the key 150 may enter a slot 165 positioned and located on an axial surface 170 of the crank gear 135. The axial surface 170 may include a plurality of slots 165 that are each sized and shaped to receive the key 150. In addition, each of the slots 165 may be oriented non-parallel to one another. As a result, the key 150 is preferably aligned with a slot 165 even when the stem 50 and the crank gear 135 are rotated relative to one another. For example, the axial surface 170 may include two slots 165 that are each oriented perpendicular to one another, although, in other embodiments, more or fewer slots may be provided, or the slots 165 may be arranged in different orientations.

When the key 150 is received in the slot 165, the key 150 may couple the stem 50 to the crank gear 135 such that the stem 50 and the crank gear 135 are configured to rotate with one another. As a result, the crank 30 may be operably coupled with the gear train 100 when the reel 10 is in the second configuration. More specifically, when the crank 30 is rotated in the first direction 120, the stem 50 may rotate in the first direction 120. As the stem 50 rotates, the key 150 may engage with the slot 165 to cause the crank gear 135 to rotate in the first direction 120 with the stem 50. As the crank gear 135 rotates in the first direction 120, the crank gear 135 may engage with a second spool gear 175 to cause the second spool gear 175 to rotate in the second direction 130. For example, the crank gear 135 and the second spool gear 175 may include spur gears that are sized and shaped to engage with one another, although, other suitable types of gears (e.g., bevel gears, miter gears, helical gears, worm gears, or ring gears) are also contemplated. Accordingly, the second spool gear 175 may be selectively rotatable via the crank 30 when the reel 10 is in the second configuration.

The second spool gear 175 may be operably coupled with the spool 20 such that the spool 20 is rotatable via the crank 30 when the reel 10 is in the second configuration. In particular, the second spool gear 175 may be coupled to the first spool gear 125 such that the first spool gear 125 and the second spool gear 175 are configured to rotate together. Therefore, the spool 20 may be selectively rotatable via the crank 30 when the reel 10 is in the second configuration.

If an angler wishes to use the motor 60, the angler may transition the reel 10 from the second configuration (see Fig. 3) to the first configuration (see Fig. 2) before activating the motor 60. To transition the reel 10 from the second configuration to the first configuration, the angler may press downwardly on a lever 180 positioned and located on the stem 50. When the angler presses the lever 180, the key 150 may move outwardly and away from the crank gear 135. As the key 150 moves outwardly from the crank gear 135, the key 150 may exit the slot 165 to decouple the stem 50 from the crank gear 135. Thus, the angler may use the lever 180 to disengage the crank 30 from the spool 20 (e.g., before activating the motor 60).

If the angler does not press the lever 180 before activating the motor 60, the crank gear 135 may begin to rotate in the first direction 120 while key 150 is engaged with the crank gear 135. More specifically, when the motor 60 is activated, the first spool gear 125 may begin to rotate in the second direction 130, which may cause the second spool gear 175 to rotate in the second direction 130. As the second spool gear 175 rotates in the second direction 130, the second spool gear 175 may engage with the crank gear 135 to cause the crank gear 135 to rotate in the first direction 120. However, the key 150 may disengage from the crank gear 135 such that the crank 30 does not rotate with the crank gear 135 when the motor 60 is activated.

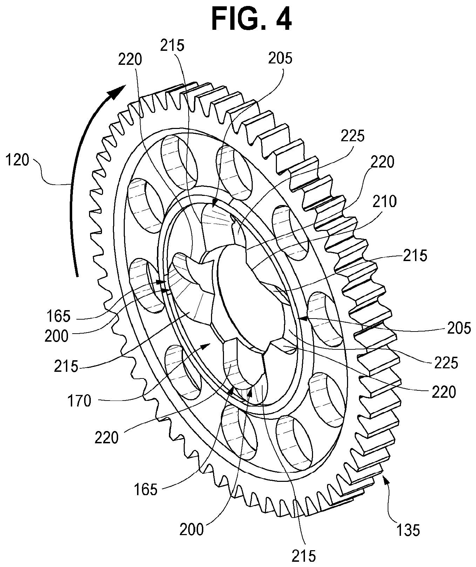

More specifically, as best illustrated in Fig. 4, each of the slots 165 may be configured such that the key 150 (see Fig. 3) exits the slot 165 when the crank gear 135 begins to rotate in the first direction 120. For example, each of the slots 165 may include a first portion 200 and a second portion 205. The first portion 200 and the second portion 205 may be positioned and located on opposing sides of a bore 210 from one another. The bore 210 may be configured to receive the stem 50 (see Fig. 3) such that the key 150 may be received in the first portion 200 and the second portion 205 of the slot 165. Additionally, the first portion 200 and the second portion 205 may each include a trailing edge 215 and a leading edge 220. When the crank gear 135 begins to rotate in the first direction 120, the trailing edges 215 of the slot 165 may move toward the key 150. The trailing edges 215 may be oriented non-parallel (or non-perpendicular) to the axial surface 170 of the crank gear 135 and the lower surface 225 of each slot 165. For example, the trailing edges 215 may slant toward the axial surface 170 of the crank gear 135. Thus, the trailing edges 215 may slide under the key 150 to guide the key 150 out from the slot 165 as the crank gear 135 rotates in the first direction 120. When the key 150 exits the slot 165, the crank gear 135 may continue to rotate in the first direction 120 while the key 150 remains stationary. Accordingly, the crank gear 135 and the key 150 may disengage from one another such that the crank 30 (see Fig. 2) remains stationary and does not rotate when the motor 60 is activated.

In contrast to the trailing edges 215, each of the leading edges 220 may be oriented substantially perpendicular to the axial surface 170 of the crank gear 135 and the lower surface 225 of each slot 165. Moreover, each of the leading edges 220 may be positioned and located toward the front of each slot 165 (e.g., with respect to the first direction 120). Accordingly, the leading edges 220 may receive rotational power from the key 150 when the crank 30 is rotated. More specifically, when the crank 30 is rotated, the key 150 may rotate toward the leading edges 220 of the slot 165. When the key 150 makes contact with the leading edges 220, the key 150 may engage with the leading edges 220 to push the leading edges 220 in the first direction 120. Thus, the leading edges 220 may be configured to receive rotational power from the key 150, and the trailing edges 215 may be configured to prevent rotational power from being transmitted to the key 150 or to reduce the rotational power being transmitted to the key 150.

While not specifically illustrated herein, it is to be understood that the teachings of the present disclosure may be used with a variety of suitable devices without departing from the spirit and scope of the invention. For example, in some alternative embodiments, the gear train may be used with another suitable reel to selectively disengage a spool from either a first source of rotational power or a second source of rotational power. In one such embodiment, the gear train may be used with a winch (e.g., for a boat trailer). In such embodiments, a crank may be selectively couplable with the gear train. When the crank is coupled with the gear train, the crank may be selectively rotatable to cause the spool to rotate (e.g., when reeling in a boat via a strap). However, the gear train may disengage the crank from the spool when the spool is being rotated by another source of rotational power (e.g., by a tension applied to the strap as the boat is being released from the trailer). As a result, the crank may remain stationary even when the spool is being rotated. Therefore, the gear train preferably helps to reduce the likelihood of a user being struck by the crank.

From the foregoing, it will be seen that the various embodiments of the present invention are well adapted to attain all the objectives and advantages hereinabove set forth together with still other advantages which are obvious, and which are inherent to the present structures. It will be understood that certain features and sub-combinations of the present embodiments are of utility and may be employed without reference to other features and sub-combinations. Since many possible embodiments of the present invention may be made without departing from the spirit and scope of the present invention, it is also to be understood that all disclosures herein set forth or illustrated in the accompanying drawings are to be interpreted as illustrative only and not limiting. The various constructions described above and illustrated in the drawings are presented by way of example only and are not intended to limit the concepts, principles, and scope of the present invention.

Many changes, modifications, variations, and other uses and applications of the present invention will, however, become apparent to those skilled in the art after considering the specification and the accompanying drawings. All such changes, modifications, variations, and other uses and applications which do not depart from the spirit and scope of the invention are deemed to be covered by the invention, which is limited only by the claims which follow.

## Claims

1. A fishing reel (10) comprising:
a housing (15);
a spool (20) rotatably coupled to the housing (15);
a motor (60) operably coupled with the spool (20);
a crank (30) rotatably coupled to the housing (15);
wherein when the fishing reel is in a first configuration, the spool (20) is selectively rotatable without causing the crank (30) to rotate;
wherein when the fishing reel is in a second configuration, the spool (20) is configured to rotate in response to the crank (30) being rotated; and
wherein when the fishing reel is in the second configuration and the motor (60) is activated, the fishing reel (10) transitions from the second configuration to the first configuration.

2. The fishing reel of claim 1, wherein when the fishing reel is in the first configuration, the crank (30) is rotatable without causing the spool (20) to rotate.

3. The fishing reel of claim 1 or 2, wherein when the fishing reel is in the first configuration, the spool (20) and the crank (30) are independently rotatable.

4. The fishing reel of any of claims 1 to 3, further including:
a stem (50) configured to rotate when the crank (30) is rotated;
a crank gear (135) operably coupled with the spool (20);
wherein when the fishing reel is in the second configuration, the crank gear (135) is configured to rotate when the stem (50) rotates; and
wherein when the fishing reel is in the first configuration, the crank gear (135) and the stem (50) are disengaged from one another.

5. The fishing reel of claim 4, wherein:
the spool (20) is coupled to each of a first spool gear (125) and a second spool gear (175);
the motor (60) is operably coupled with the first spool gear (125); and
the crank gear (135) is operably coupled with the second spool gear (175).

6. The fishing reel of claim 4, further including:
a spool gear (125) coupled to the spool (20);
a motor gear (115) configured to rotate in a first direction (120) when the motor (60) is activated,
wherein when the motor gear (135) rotates in the first direction (120), the motor gear (135) engages with the spool gear (125) to cause the spool (20) to rotate in a second direction (130); and
wherein the first direction (120) and the second direction (130) are oriented opposite to one another.

7. The fishing reel of any of claims 1 to 6, wherein the motor (60) is positioned and located proximate to a first end (95) of the spool (20), and wherein the crank (30) is positioned and located proximate to a second end (105) of the spool (20).

8. A fishing reel (10) comprising:
a body configured to couple to a fishing rod;
a spool (20) rotatably coupled to the body;
a crank (30) rotatably coupled to the body;
a stem (50) configured to rotate in a first direction (120) when the crank (30) is rotated;
a key (150) coupled to the stem (50), the key (150) being selectively movable between a first position and a second position;
a crank gear (135) configured to transmit rotational power to the spool (20);
at least one slot (165) positioned and located on the crank gear (135);
wherein when the key (150) is in the first position, the key (150) is positioned and located in the at least one slot (165) and configured to engage with the at least one slot (165) to transmit rotational power from the stem (50) to the crank gear (135); and
wherein when the crank gear (135) rotates in the first direction (120) relative to the key (150), the key (150) is configured to move from the first position to the second position.

9. The fishing reel of claim 8, wherein the key (150) is configured to move away from the spool (20) when the key (150) moves from the second position to the first position.

10. The fishing reel of claim 8 or 9, wherein:
the at least one slot (165) includes a leading edge (220) and a trailing edge (215);
the key (150) is configured to engage with the leading edge (220) to transmit rotational power from the stem (50) to the crank gear (135); and
the trailing edge (215) is configured to guide the key (150) out from the at least one slot (165) to move the key (150) from the first position to the second position.

11. The fishing reel of claim 10, wherein the leading edge (220) is positioned and located in front of the trailing edge (215) with respect to the first direction (120).

12. The fishing reel of claim 10 or 11, wherein:
the at least one slot (165) is positioned and located on an axial surface (170) of the crank gear;
the leading edge (220) is oriented substantially perpendicular to the axial surface (170); and
the trailing edge (215) is oriented non-parallel the axial surface (170).

13. The fishing reel of any of claims 8 to 12, further including:
a button (145) positioned and located on the stem (50), the button (145) configured to move the key (150) from the first position to the second position; and
a lever (180) positioned and located on the stem, the lever (180) configured to move the key (150) from the second position to the first position.

14. The fishing reel of any of claims 8 to 13, wherein the crank (30) includes:
a linkage member (45) having an inner end and an outer end;
a handle (35) positioned and located proximate to the outer end of the linkage member (45);
wherein the stem (50) is positioned and located proximate to the inner end of the linkage member (45); and
wherein the stem (50) is configured to rotate when the linkage member (45) is rotated.

15. A mechanism for disengaging a crank (30) from a spool (20), the mechanism comprising:
a body;
a gear (135) rotatably coupled to the body;
at least one slot (165) formed in an axial surface (170) of the gear (135), the at least one slot (165) including a leading edge (220) and a trailing edge (215);
a stem (50) selectively rotatable in a first direction (120) relative to the body;
a key (150) coupled to the stem (50);
wherein when the stem (50) is rotated in the first direction (120) relative to the gear (135), the key (150) is configured to engage with the leading edge (220) to cause the gear (135) to rotate in the first direction (120); and
wherein when the gear (135) is rotated in the first direction (120) relative to the stem (50), the trailing edge (215) is configured to guide the key (50) out from the at least one slot (165).

16. The mechanism of claim 15, wherein the at least one slot (165) includes a lower surface (225), and wherein the trailing edge (215) is oriented non-parallel to the lower surface (225).

17. The mechanism of claim 15 or 16, wherein the leading edge (220) is oriented substantially perpendicular to the axial surface (170) of the gear (135).

18. The mechanism of any of claims 15 to 17, wherein a handle (35) is coupled to the stem (50) such that the handle (35) is configured to remain stationary when the gear (135) is rotated in the first direction (120) relative to the stem (50).

19. The mechanism of any of claims 15 to 18, wherein the gear (135) includes a bore (210) positioned and located adjacent to the at least one slot (165), and wherein the stem (50) is received in the bore (210).

20. The mechanism of any of claims 15 to 19, wherein the at least one slot (165) includes a plurality of slots, and wherein the plurality of slots are oriented non-parallel to one another.
